# EUROPEAN PATENT APPLICATION

(11) **EP 4 822 145 A1**
(43) Date of publication of application: **14.10.2026**
(21) Application number: 26170035.5
(22) Date of filing: 31.03.2026
(51) Int. Cl.: F01D 25/18

(54) **ROTATING SEAL ASSEMBLY WITH AXIAL PUMP AND FLOATING SEAL**

(30) Priority: 01.04.2025 US 202519097179
(71) Applicant: Pratt & Whitney Canada Corp., Longueuil, Québec J4G 1A1 (CA)
(72) Inventor: MACFARLANE, Ian, (01BE5) Longueuil, J4G 1A1 (CA); ABDELNOUR, Michel, (01BE5) Longueuil, J4G 1A1 (CA)
(74) Representative: Dehns

(57) **Abstract**

A rotating seal assembly (24) of a gas turbine engine (14) includes a rotating seal element (34), and a rotationally stationary seal support (36; 64) positioned radially outboard of the rotating seal element (34). The rotating seal element (34) and the seal support (36; 64) are configured to define a seal interface therebetween. The seal element (34) includes an axial pump portion (54) defined by one or more axially and circumferentially extending grooves (56) to urge an airflow (50) therethrough. The airflow (50) is configured to prevent a fluid from entering the seal interface. The axial pump portion (54) defines a radial running clearance (62) with a floating seal (60).

## Description

### TECHNICAL FIELD

The present invention pertains to the art of aircraft propulsion, and more particularly to thermal engines of aircraft propulsion systems.

### BACKGROUND

Hybrid aircraft applications, such as aircraft that have a combination of electrically-driven propellers and thermal engine, such as a gas turbine engine, - driven propellers on wing can require the thermal engines to be shut down during extended periods of the mission. During this windmilling operation of the thermal engine, rotating engine components such as bearings, gears, and the like need to have a certain amount of lubrication to prevent damage. Utilizing an oil system via pressure & scavenge pumps can accomplish normal required lubrication. However, the secondary air system at sub-idle conditions may not sufficiently pressurize the bearing compartment seal to prevent oil from leaking outside the bearing cavities.

These leaks can lead to oil smell in the cabin, bleed valve contamination, coking of engine core components, smoke on start and shutdown or oil in the exhaust duct. Typical air seals consist of a rotating and stationary component, with a small clearance maintained between the components in operation. Air pressure (secondary air system) blowing between them to draw air inside the bearing cavity, preventing oil to exit through the seals. Without these typical air pressures, a novel solution is required to improve the sealing at the bearing cavities at low RPM.

### BRIEF DESCRIPTION

In an aspect of the present invention, a rotating/rotational seal assembly of a gas turbine engine includes a rotating/rotational seal element, and a rotationally stationary seal support positioned radially outboard of the rotating seal element. The rotating/rotational seal element and the seal support are configured to define a seal interface therebetween. The seal element includes an axial pump portion defined by one or more axially and circumferentially extending grooves to urge an airflow therethrough. The airflow is configured to prevent a fluid from entering the seal interface. The axial pump portion defines a radial running clearance with a floating seal.

In an embodiment of the above, the floating seal is a floating carbon seal.

In an embodiment according to any of the previous embodiments, the floating seal is radially supported by a seal arm extending from the seal support.

In an embodiment according to any of the previous embodiments, the seal arm biases a position of the floating seal toward the axial pump portion.

In an embodiment according to any of the previous embodiments, the floating seal is axially retained to the seal support via a retaining plate.

In an embodiment according to any of the previous embodiments, the seal element is one of a carbon seal element or includes a plurality of knife edge elements extending radially outwardly from an element base toward the seal support.

In an embodiment according to any of the previous embodiments, one or more airflow openings extend through the seal element to supply the axial pump portion with the airflow.

In an embodiment according to any of the previous embodiments, the airflow is directed circumferentially in a first direction opposite a second direction of the rotation of the seal element.

In another aspect of the present invention, a bearing and seal arrangement of a gas turbine engine includes a bearing positioned in a bearing housing. The bearing is supportive of a rotating/rotational component of the gas turbine engine. A seal assembly is positioned at the bearing housing to seal the bearing housing. The seal assembly includes a seal element operably connected to the rotating/rotational component and rotatable therewith, and a rotationally stationary seal support positioned radially outboard of the seal element. The seal element and the seal support are configured to define a seal interface therebetween. The seal element includes an axial pump portion defined by one or more axially and circumferentially extending grooves to urge an airflow therethrough. The airflow is configured to prevent a fluid from entering the seal interface. The axial pump portion defines a radial running clearance with a floating seal.

In an embodiment of the above, the floating seal is a floating carbon seal.

In an embodiment according to any of the previous embodiments, the floating seal is radially supported by a seal arm extending from the seal support.

In an embodiment according to any of the previous embodiments, the seal arm biases a position of the floating seal toward the axial pump portion.

In an embodiment according to any of the previous embodiments, the floating seal is axially retained to the seal support via a retaining plate.

In an embodiment according to any of the previous embodiments, the seal element is one of a carbon seal element or includes a plurality of knife edge elements extending radially outwardly from an element base toward the seal support.

In an embodiment according to any of the previous embodiments, one or more airflow openings extend through the seal element to supply the axial pump portion with the airflow.

In an embodiment according to any of the previous embodiments, the fluid is lubricant from the bearing housing.

In an embodiment according to any of the previous embodiments, the airflow is directed circumferentially in a first direction opposite a second direction of the rotation of the seal element.

In yet another aspect of the present invention, a propulsion arrangement of an aircraft includes a propeller, and a gas turbine engine operably connected to the propeller to drive rotation of the propeller. The gas turbine engine includes a rotating/rotational shaft, and a bearing positioned in a bearing housing. The bearing is supportive of a rotating/rotational component of the gas turbine engine. A seal assembly is positioned at the bearing housing to seal the bearing housing. The seal assembly includes a seal element operably connected to the rotating/rotational component and rotatable therewith, and a rotationally stationary seal support positioned radially outboard of the seal element. The seal element and the seal support are configured to define a seal interface therebetween. The seal element includes an axial pump portion defined by one or more axially and circumferentially extending grooves to urge an airflow therethrough, the airflow configured to prevent a fluid from entering the seal interface. The axial pump portion defines a radial running clearance with a floating seal.

In an embodiment of the above, the floating seal is a floating carbon seal.

In an embodiment according to any of the previous embodiments, the floating seal is radially supported by a seal arm extending from the seal support.

### BRIEF DESCRIPTION OF THE DRAWINGS

The following descriptions should not be considered limiting in any way. With reference to the accompanying drawings, like elements are numbered alike:
FIG. 1 is a schematic illustration of an exemplary embodiment of an aircraft;
FIG. 2 is a partial cross-sectional view of an exemplary embodiment of a bearing and bearing seal arrangement of a gas turbine engine;
FIG. 3 is a perspective view of an exemplary embodiment of a rotating seal element including an axial pump portion; and
FIG. 4 is a partial cross-sectional view of an axial pump portion of an exemplary embodiment of a bearing seal arrangement.

### DETAILED DESCRIPTION

A detailed description of one or more embodiments of the disclosed apparatus and method are presented herein by way of exemplification and not limitation with reference to the Figures.

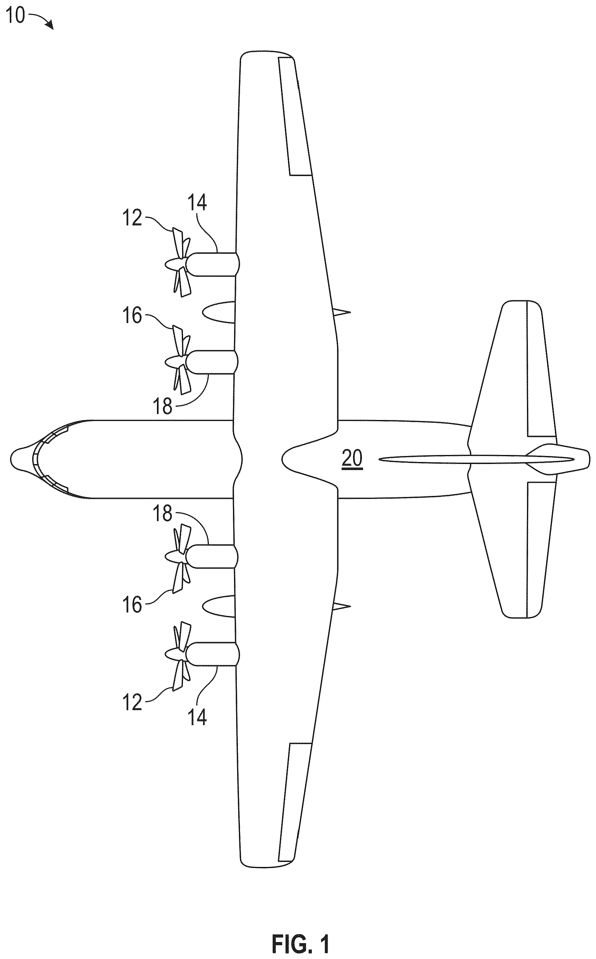

Referring now to FIG. 1, illustrated is an embodiment of an aircraft 10. Aircraft 10 includes, for example, a hybrid propulsion aircraft 10, including at least one first propeller 12 driven by a thermal engine, such as a gas turbine engine 14, and at least one second propeller 16 driven by an electric motor 18. The propellers 12, 16, gas turbine engine 14 and electric motor 18 are all mounted on or in an aircraft body 20. In some operating conditions during flight of the aircraft 10, operation of the gas turbine engine 14 may be stopped, and only the electric motor 18 and second propeller 16 are utilized to propel the aircraft 10.

During such operations, the aerodynamic forces will continue to rotate the first propeller 12, even though the gas turbine engine 14 is not operating. During this rotation, referred to as "windmilling", rotating components, such as bearing systems or the like, require lubrication, with lubricant, such as oil, retained in bearing compartments via air pressure.

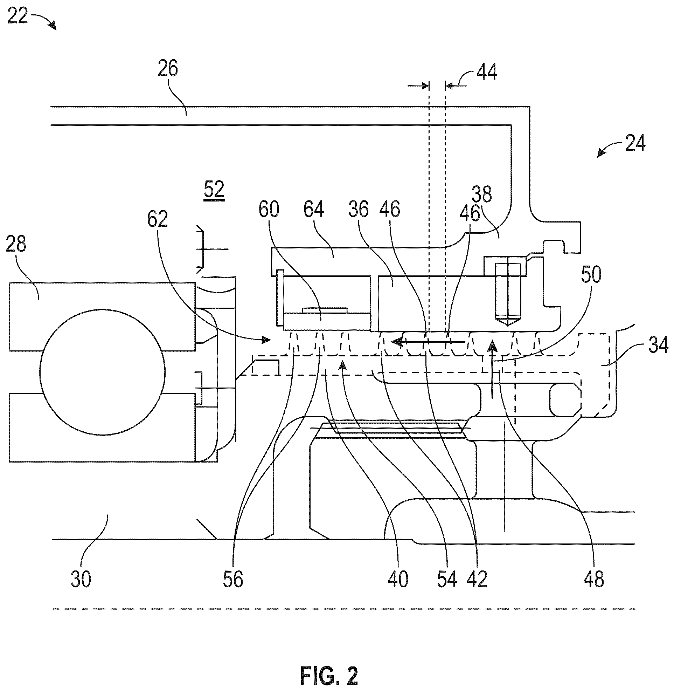

Shown in FIG. 2 is an embodiment of an exemplary bearing arrangement 22 and bearing compartment seal 24 of the gas turbine engine 14 for driving the first propeller 12. The bearing arrangement 22 includes a bearing housing 26 in which a bearing 28, for example, a roller bearing is located. The bearing 28 is supportive of a rotating component, such as a shaft 30. In some embodiments, the shaft 30 may be a propeller shaft supportive of the first propeller 12. A volume of lubricant, such as oil, is located inside the bearing housing 26 to lubricate the components inside the bearing housing 26.

The bearing seal 24 is disposed at an interface of the bearing housing 26 and shaft 30, where the shaft 30 extends outside of the bearing housing 26. The bearing seal 24 includes a rotating seal element 34 secured to the shaft 30 and configured to rotate therewith. A rotationally static seal support 36 is fixed to a rotationally static element, such as a bearing housing wall 38 of the bearing housing 26. In some embodiments, such as shown in FIG. 2, the rotating seal element 34 is labyrinth seal element 34, having an element base 40 and a plurality of knife edge elements 42 extending radially outwardly from the element base 40 toward the static seal support 36. The knife edge elements 42 are axially spaced apart by an element pitch 44, which in some embodiments is equal between all of the knife edge elements 42, or in other embodiments may be varied such that a first element pitch 44 separates two adjacent knife edge elements 42, while a second element pitch 44, different from the first element pitch 44 separates another two adjacent knife edge elements 42. In some embodiments, a knife edge tip 46 of the knife edge elements 42 may contact the seal support 36 during rotation of the seal element 34, while in other embodiments a small radial clearance is defined between the seal element 34 and the knife edge tip 46. The seal element 34 and the seal support 36 define a tortuous path therebetween to act as a seal during normal operation of the gas turbine engine 14 to retain the lubricant inside the bearing housing 26.

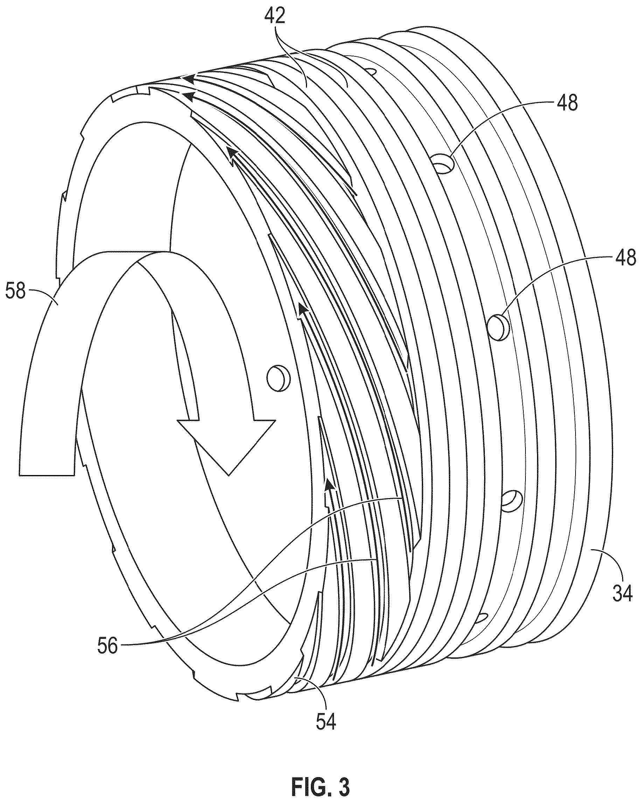

The element base 40 includes one or more airflow openings 48 therein through which an airflow 50 is directed toward an interior 52 of the bearing housing 26 to discourage lubricant flow out of the bearing housing 26. In some embodiments, the one or more airflow openings 48 are disposed axially between two adjacent knife edge elements 42 of the seal element 34. To aid in inducing this airflow during windmilling operation of the gas turbine engine 14, the element base 40 further includes an axial pump portion 54, defined by a plurality of axial and circumferentially-extending grooves 56 formed in the element base 40, as best shown in FIG. 3. In the embodiment illustrated, the axial pump portion 54 is disposed on the seal element 34 axially between the knife edge elements 42 and the bearing 28, with at least one of the knife edge elements 42 disposed axially between the axial pump portion 54 and the one or more airflow openings 48. As shown in FIG. 3, as the seal element 34 is rotated with the shaft 30 in a first direction 58, the airflow 50 is urged along the grooves 56 circumferentially and axially toward the bearing 28, thus stopping or preventing lubricant from the interior 52 of the bearing housing 26 toward the knife edge elements 42 and through the bearing compartment seal 24.

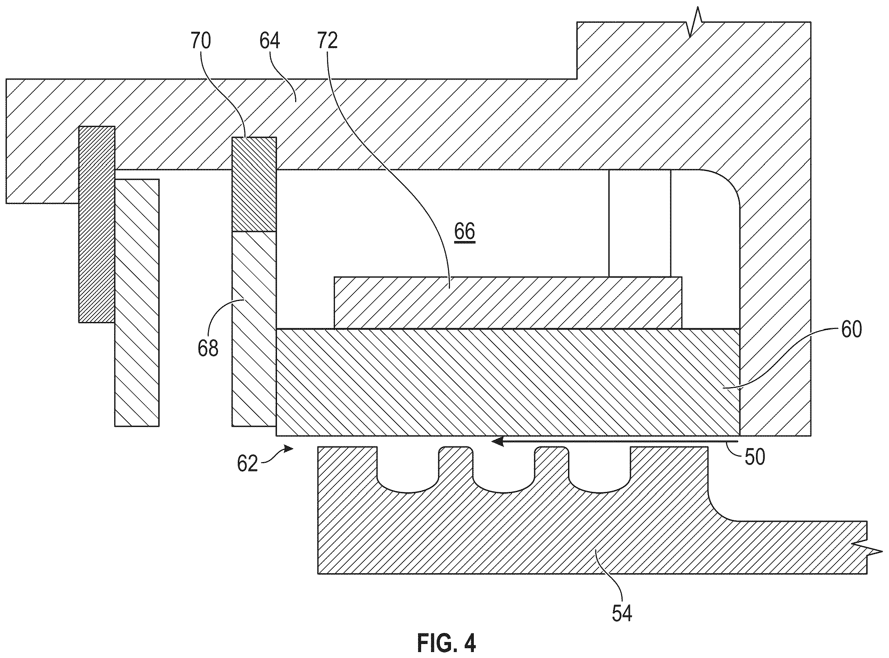

The axial pump portion 54 interfaces with a floating seal element 60 to define a running clearance 62. In the exemplary embodiment illustrated best in FIG. 4, the floating seal element 60, which in some embodiments is a carbon seal element, is positioned in a seal support 64, with a seal cavity 66 defined radially between the floating seal element 60 and the seal support 64. In some cases, the floating seal element 60 is axially retained to the seal support 64 via a retaining plate 68. In some embodiments, the retaining plate 68 is installed into a retaining groove 70 in the seal support 64. A pressure difference between the seal cavity 66 and the airflow 50 defines the running clearance 62 between the axial pump portion 54 and the floating seal element 60. In some embodiments, the axial pump portion 54 includes a hard coating applied thereto to protect the axial pump portion 54 from abrasion by the floating seal element 60. The floating seal element 60 is retained in the seal support 64 by, for example, a seal arm 72. The seal arm 72 may extend radially and circumferentially from the seal support 64, and in some embodiments may operate as a spring element, biasing the radial position of the floating seal element 60 toward the axial pump portion 54. As the airflow 50 increases in pressure, the pressure differential overcomes a biasing force of the seal arm 72 thus urging the floating seal element 60 radially outwardly, which increases the running clearance 62.

In addition to the benefits realized during windmilling operation of the gas turbine engine 14, the use of the axial pump portion 54 may lead to a better overall sealing efficiency of the bearing seal 24. This may allow for reducing the required pressurized airflow during normal operation, and further improvements to the oil/air system and their components.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A rotating seal assembly (24) for a gas turbine engine (14), comprising:
a rotating seal element (34); and
a rotationally stationary seal support (36; 64) positioned radially outboard of the rotating seal element (34), the rotating seal element (34) and the seal support (36; 64) configured to define a seal interface therebetween;
wherein the seal element (34) includes an axial pump portion (54) defined by one or more axially and circumferentially extending grooves (56) to urge an airflow (50) therethrough, the airflow (50) configured to prevent a fluid from entering the seal interface;
wherein the axial pump portion (54) defines a radial running clearance (62) with a floating seal (60).

2. The rotating seal assembly (24) of claim 1, wherein the floating seal (60) is a floating carbon seal.

3. The rotating seal assembly (24) of claim 1 or 2, wherein the floating seal (60) is radially supported by a seal arm (72) extending from the seal support (64).

4. The rotating seal assembly (24) of claim 3, wherein the seal arm (72) biases a position of the floating seal (60) toward the axial pump portion (54).

5. The rotating seal assembly (24) of any preceding claim, wherein the floating seal (60) is axially retained to the seal support (64) via a retaining plate (68).

6. The rotating seal assembly (24) of any preceding claim, wherein the seal element (34) is one of a carbon seal element or includes a plurality of knife edge elements (42) extending radially outwardly from an element base (40) toward the seal support (36).

7. The rotating seal assembly (24) of any preceding claim, further comprising one or more airflow openings (48) extending through the seal element (34) to supply the axial pump portion (54) with the airflow (50).

8. The rotating seal assembly (24) of any preceding claim, wherein the airflow (50) is directed circumferentially in a first direction (58) opposite a second direction of the rotation of the seal element (34).

9. A bearing and seal arrangement (22) for a gas turbine engine (14) comprising:
a bearing (28) disposed in a bearing housing (26), the bearing (28) configured to be supportive of a rotating component (30) of the gas turbine engine (14); and
the seal assembly (24) of any preceding claim disposed at the bearing housing (26) to seal the bearing housing (26), the seal element (34) configured to be operably connected to the rotating component (30) and rotatable therewith.

10. The bearing and seal arrangement (22) of claim 9, wherein the fluid is lubricant from the bearing housing (26).

11. A propulsion arrangement of an aircraft (10), comprising:
a propeller (12); and
a gas turbine engine (14) operably connected to the propeller (12) to drive rotation of the propeller (12), the gas turbine engine (14) including:
a rotating shaft (30); and
a bearing (28) disposed in a bearing housing (26), the bearing (28) supportive of the rotating shaft (30);
the seal assembly (24) of any of claims 1 to 8 disposed at the bearing housing (26) to seal the bearing housing (26), the seal element (34) operably connected to the rotating shaft (30) and rotatable therewith.
